# FASCICULE DE BREVET EUROPEEN

(11) **EP 0 425 353 B1**
(45) Date de publication et mention de la délivrance du brevet: **26.04.1995**
(21) Numéro de dépôt: 90402952.7
(22) Date de dépôt: 19.10.1990
(51) Int. Cl.: A01D 46/28

(54) **Secoueur et machine à vendanger équipée d'un tel secoueur**
Rüttler und Maschine zur Traubenernte mit einem solchen Rüttler
Vibratory device and machine for grape harvesting equipped with such a vibratory device

(30) Priorité: 26.10.1989 FR 8914056
(43) Date de publication de la demande: 02.05.1991
(73) Titulaire: ETABLISSEMENTS GREGOIRE S.A., F-16100 Cognac (FR)
(72) Inventeur: Gregoire, James, F-16100 Cognac (FR)
(74) Mandataire: Kopacz, William James

(56) Documents cités:
- EP-A- 0 267 829
- FR-A- 2 605 488
- FR-A- 2 638 600
- FR-A- 2 638 602
- FR-A- 2 639 177
- SU-A- 1 445 615

## Description

La présente invention concerne un secoueur destiné en particulier à équiper une machine à vendanger. On connaît, dans l'état de la technique, de nombreux modèles de secoueurs constitués généralement par une tige flexible en fibre de verre ou en matière plastique. Cette tige flexible est reliée à un support oscillant. L'extrémité libre de cette tige agit sur les grappes ou les fruits de façon à provoquer leur chute. De tels secoueurs sont habituellement montés sur des machines à vendanger auto-motrice. La cadence des secoueurs est bien entendu liée à la vitesse d'avancement de la machine à vendanger qu'ils équipent, et il est fréquent que le support oscillant soit animé de vitesses élevées de l'ordre de 350 à 450 cycles par minute.

A de telles vitesses, les mouvements de l'extrémité libre du secoueur flexible sont mal contrôlés et celles-ci se comportent de façon très agressive vis-à-vis de la végétation de la plante. Les secoueurs mettant en oeuvre une tige flexible, connue dans l'état de la technique, provaquent en particulier des dégâts importants tels que : effeuillage excessif, casse des sarments ou des rameaux de vigne. Cela entraîne bien entendu une diminution de la longévité de la plante.

Ce phénomène est encore aggravé par l'utilisation, sur certains secoueurs connus dans l'état de l'art, d'un embout en acier destiné à limiter l'usure de l'extrémité libre constituant la zone active.

On a proposé également dans l'art antérieur , en particulier dans la demande de brevet français 2.605.488, de monter le secoueur flexible sur un support vertical animé du mouvement oscillant. Les deux extrémités d'une tige flexible sont raccordées à ce support vertical. Ce dispositif permet certes d'éviter les mouvements incontrôlés de l'extrémité libre d'un secoueur flexible, mais présente une inertie importante qui les rendent plus compatibles avec les cadences élevées requises sur des machines rapides. Par ailleurs, ce mode de réalisation impose une courbure de type parabolique centrée sur un plan médian entre les deux brides de fixation de la tige flexible sur le support vertical, ce qui n'est pas la forme optimale pour un secoueur.

L'objet de la présente invention est de réduire l'agressivité des secoueurs flexibles et d'augmenter l'efficacité de la machine à vendanger ainsi équipée.

La présente invention concerne plus particulièrement un secoueur, dont la tige flexible présente un premier segment sensiblement longitudinal dont l'une des extrémités au support oscillant et l'autre extrémité dite extrémité libre est prolongée par un deuxième segment recourbé d'environ 180° du côté opposé à la végétation, ce deuxième segment étant lui-même prolongé par un troisième segment sensiblement longitudinal dont l'extrémité est reliée à un point fixe par rapport à l'axe d'oscillation. Le secoueur ainsi réalisé comporte une seule pièce flexible, ce qui simplifie sa réalisation et assure une fiabilité accrue. De préférence, le premier segment est convexe vu du côté de la végétation, son extrémité libre étant sensiblement tangente à la végétation lorsqu'il vient en contact avec celle-ci.

Avantageusement, les trois segments sont réalisés par thermoformage d'une tige flexible.

Selon une variante, la tige flexible est réalisée par une structure multicouche de fibres de verre. Selon une autre variante, la tige flexible est découpée dans une plaque de matériau flexible transversalement.

Selon un mode de réalisation avantageux, la tige est réalisée en polyamide, en fibre de verre, en KEVLAR (marque déposée), en Ertalon (marque déposée) ou en un métal déformable élastiquement tel que de l'acier à ressort ou de l'acier inoxydable.

Avantageusement, le support oscillant comporte un premier manchon de maintien de l'extrémité du premier segment et un deuxième manchon de maintien de l'extrémité du troisième segment.

Selon une autre variante, l'un au moins des manchons de maintien est mobile axialement et comporte des moyens de blocage sur le support oscillant.

Selon une autre variante, la longueur de pénétration de l'extrémité de l'un au moins des segments dans le manchon correspondant est ajustable et verrouillable.

La présente invention concerne également une machine à vendanger mettant en oeuvre de tels secoueurs.

La présente invention sera mieux comprise à la lecture de la description qui suit s'appuyant sur les dessins où :

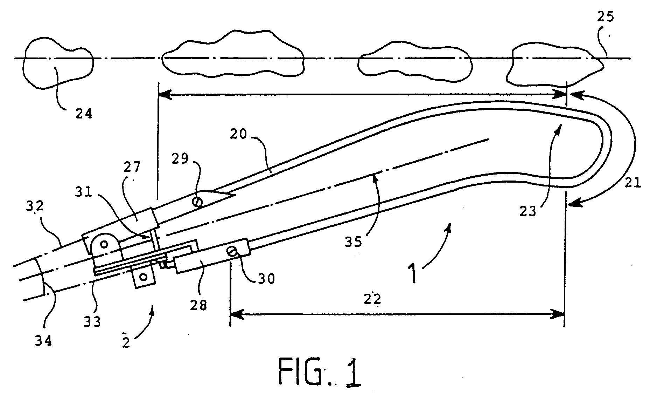

- la figure 1 représente une vue de dessus d'un secoueur selon une variante visant à améliorer la cinématique du dit secoueur.

Le secoueur représenté en figure 1 est constitué par une tige flexible (1) présentant un premier segment (20) sensiblement rectiligne, un deuxième segment (21) formant une courbe d'environ 180° et un troisième segment (22) sensiblement rectiligne.

Le premier segment (20) présente à son extrémité libre (23) une partie convexe vue du côté des végétations (24). Cette partie convexe (23) est sensiblement tangente à la ligne médiane (25) de la végétation (24) lorsque le secoueur est en contact avec la végétation. Cette première partie (20) se poursuit par une deuxième partie (21) formant un angle d'environ 180°, tourné vers le côté opposé à la végétation. La troisième partie (22) est raccordée à cette deuxième partie courbe (21) et comporte une extrémité solidaire du support oscillant (2).

Selon un exemple de réalisation, la tige flexible est constituée en ERTALON (marque déposée) distribué notamment par la société Cestidur. La courbure de la tige flexible est réalisée par thermoformage, en plongeant la tige d'ERTALON dans de l'eau bouillante. Le support oscillant comporte un premier manchon (27) dans lequel l'une des extrémités de la tige flexible est enfilée. L'autre extrémité est enfilée dans un deuxième manchon (28). Les manchons des vis de blocage (29, 30) permettant de solidariser la tige flexible avec le support oscillant lorsque celui-ci est en place. En faisant coulisser longitudinalement l'une ou l'autre des extrémités, on modifie la cambrure de la première partie (20) de la tige flexible et donc l'angle d'attaque de l'extrémité libre sur la végétation.

Par ailleurs, le support oscillant comporte une vis de réglage (31) permettant d'ajuster l'angle relatif entre l'axe longitudinal (32) de la première partie (20) de la tige flexible et de l'axe longitudinal (33) de la troisième partie (22) de ladite tige flexible. En ajustant cet angle (34), on ajuste bien entendu également l'angle entre chacun des axes longitudinaux (32, 33) et l'axe longitudinal médian (35) du secoueur (1).

Le module d'élasticité transversal, en particulier le module d'élasticité dans le plan horizontal de la tige flexible formant le secoueur, est choisi de façon à ce que les chocs provoqués par le contact de l'extrémité libre sur la végétation soient absorbés par la tige flexible, mais que celle-ci garde sensiblement sa forme initiale. Le module d'élasticité transversal dans le plan vertical est choisi de façon à ce que la tige flexible (1) soit autoportante, et que son extrémité libre reste sensiblement dans le plan engendré par les axes longitudinaux (32 et 33) des manchons (28 et 29). Les deux modules d'élasticité transversaux sont identiques lorsqu'il s'agit d'une tige réalisée en un matériau homogène, mais peuvent être différents dans le cas de découpage dans un matériau laminé ou dans des structures multicouche ou multifibre.

La présente invention a été décrite dans ce qui précède à titre d'exemple non limitatif. Il est bien entendu que l'homme du métier est à même de réaliser de nombreuses variantes de la présente invention sans aucune recherche supplémentaire. Il peut en particulier remplacer les moyens de réglage de l'extension de la tige de liaison (7) par un système de filetage coopérant avec le filetage de la coquille de fixation (8) ou avec un écrou de réglage fixé à l'extrémité de la tige de liaison (7).

## Revendications

1. Secoueur en particulier pour machine à vendanger du type comportant une tige flexible dont l'une des extremités est reliée à un support oscillant (2) entraîné par un axe vertical caractérisé en ce que la tige flexible présente un premier segment (20) sensiblement longitudinal dont l'une des extrémités est solidaire du support oscillant (2) et dont l'autre extrémité est prolongée par un deuxième segment (21) recourbé d'environ 180° du coté opposé à la végétation (24), ce deuxième segment étant lui-même prolongé par un troisième segment (22) sensiblement longitudinal dont l'extrémité est solidaire de l'axe d'oscillation.

2. Secoueur, en particulier pour machine à vendanger, selon la revendication 1, caractérisé en ce que les trois segments (20, 21, 22) sont réalisés par thermoformage d'une tige flexible.

3. Secoueur, en particulier pour machine à vendanger, selon l'une quelconque des revendications 1 à 2, caractérisé en ce que la tige flexible est réalisée en fibres de verre, en polyamide, en KEVLAR®, en ERTALON® ou en un métal déformable élastiquement.

4. Secoueur, en particulier pour machine à vendanger, selon l'une quelconque des revendications 1 à 2, caractérisé en ce que la tige flexible et découpée dans une plaque de matériau flexible transversalement.

5. Secoueur, en particulier pour machine à vendanger, selon l'une quelconque des revendications 1 à 4, caractérisé en ce que le support oscillant (2) comporte un premier manchon de maintien (27) pour la solidarisation de l'extremité du premier segment (20) et un deuxième manchon de maintien (28) pour la solidarisation de l'extrémité du troisième segment (22).

6. Secoueur, en particulier pour machine à vendanger, selon la revendication 5, caractérisé en ce que le support oscillant (2) comporte des moyens de réglage (31) de l'angle formé entre l'axe longitudinal (32) de l'un au moins des manchons de maintien (27, 28) et l'axe longitudinal médian (35) du secoueur.

7. Secoueur, en particulier pour machine à vendanger, selon l'une quelconque des revendications 5 ou 6, caractérisé en ce que l'un au moins des manchons (27, 28) est mobile axialement par rapport au support oscillant (2) et comporte des moyens de blocage.

8. Secoueur, en particulier pour machine à vendanger, selon l'une quelconque des revendications 5 à 7, caractérisé en ce que la longueur de l'extrémité de l'un des segments (20, 22) pénètre dans le manchon de maintien (27, 28) correspondant d'une longueur ajustable, l'extrémité dudit segment pouvant être verrouillée par rapport au manchon de maintien correspondant.

9. Machine à vendanger comportant au moins un secoueur selon l'une quelconque des revendications précédentes.

## Claims

1. A shaking device, especially for a vintage machine, of a type including a flexible rod, one end of which is connected to an oscillating bracket (2) which is driven by a vertical axle, characterized in that said flexible rod is formed of a first substantially longitudinal segment (20), one end of which is integral with said oscillating bracket (2) and the other end of which is extended with an approximately 180° bent second segment (21) at the side opposed to vegetation (24), said second segment being itself extended with a third substantially longitudinal segment (22), the end of which is integral with said oscillating axle.

2. The shaking device, especially for a vintage machine, of claim 1, characterized in that said three segments (20, 21, 22) are obtained by thermoforming a flexible rod.

3. The shaking device, especially for a vintage machine, of one of claims 1 to 2, characterized in that said flexible rod is made of glass fibers, polyamide, KEVLAR^{(TM)}, ERTALON^{(TM)} or an elastically ductile metal.

4. The shaking device, especially for a vintage machine, of one of claims 1 to 2, characterized in that said flexible rod is cut in a plate made of transversally flexible material.

5. The shaking device, especially for a vintage machine, of one of claims 1-4, characterized in that said oscillating bracket (2) includes a first holding sleeve (27) to make integral the end of said first segment (20) and a second holding sleeve (28) to make integral the end of said third segment (22).

6. The shaking device, especially for a vintage machine, of claim 5, characterized in that said oscillating bracket (2) includes adjustment means (31) for adjusting the angle between longitudinal axis (32) of at least one of said holding means (27, 28) and median longitudinal axis (35) of said shaking device.

7. The shaking device, especially for a vintage machine, of claim 5 or 6, characterized in that at least one of said sleeves (27, 28) is axially movable in relation to said oscillating bracket (2) and includes locking means.

8. The shaking device, especially for a vintage machine, of any claim 5-7, characterized in that the length of the end of one of said segments (20, 22) penetrates into said corresponding holding sleeve (27, 28) of an adjustable length, with the end of said segment being able to be locked with reference to the corresponding holding means.

9. A vintage machine including at least one shaking device according any one of preceding claims.

## Patentansprüche

1. Schüttler, insbesondere für Weinlesemaschine vom Typ umfassend eine flexible Stange, deren eines Ende mit einer schwingende Halterung (2) verbunden ist, welche von einer vertikalen Achse angetrieben wird,
dadurch gekennzeichnet,
daß die flexible Stange einen ersten, sich im wesentlichen in Längsrichtung erstreckenden ersten Abschnitt (20) aufweist, dessen eines Ende mit der schwingenden Halterung (2) zusammenwirkt und dessen anderes Ende sich um einen zweiten Abschnitt (21) verlängert, welcher um etwa 180° auf der dem Bewuchs (24) abgewandten Seite gebogen ist, und wobei dieser zweite Abschnitt sich seinerseits um einen dritten Abschnitt (22) verlängert, welcher sich im wesentlichen in Längsrichtung erstreckt und dessen Ende mit der Schwingachse zusammenwirkt.

2. Schüttler, insbesondere für eine Weinlesemaschine, gemäß Anspruch 1,
dadurch gekennzeichnet,
daß die drei Abschnitte (20, 21, 22) durch Thermoformung einer flexiblen Stange gebildet sind.

3. Schüttler, insbesondere für eine Weinlesemaschine, gemäß einem der Ansprüche 1 bis 2,
dadurch gekennzeichnet,
daß die flexible Stange aus Glasfaser, Polyamid, KEVLAR, ERTALON oder einem elastisch verformbaren Metall hergestellt ist.

4. Schüttler, insbesondere für eine Weinlesemaschine, gemäß einem der Ansprüche 1 bis 2,
dadurch gekennzeichnet,
daß die flexible Stange aus einer Platte aus quer flexiblem Material herausgeschnitten ist.

5. Schüttler, insbesondere für eine Weinlesemaschine, gemäß einem der Ansprüche 1 bis 4,
dadurch gekennzeichnet,
daß die schwingende Halterung (2) eine erste Haltemuffe (27) zum Zusammenwirken mit dem Ende des ersten Abschnitts (20) und eine zweite Haltemuffe (28) zum Zusammenwirken mit dem Ende des dritten Abschnitts (22) aufweist.

6. Schüttler, insbesondere für eine Weinlesemaschine, gemäß Anspruch 5,
dadurch gekennzeichnet,
daß die schwingende Halterung (2) Mittel (31) zum Verstellen des Winkels aufweist, welcher von der Längsachse (32) der mindestens einen Haltemuffe (27, 28) und der mittleren Längsachse (35) des Schüttlers gebildet ist.

7. Schüttler, insbesondere für eine Weinlesemaschine, gemäß einem der Ansprüche 5 oder 6,
dadurch gekennzeichnet,
daß wenigstens eine der Muffen (27, 28) axial beweglich gegenüber der schwingenden Halterung (2) ist und Verriegelungsmittel aufweist.

8. Schüttler, insbesondere für eine Weinlesemaschine, gemäß einem der Ansprüche 5 bis 7,
dadurch gekennzeichnet,
daß das Ende eines der Abschnitte (20, 22) in die entsprechende Haltemuffe (27, 28) um eine einstellbare Länge hineindringt, wobei das Ende des genannten Abschnitts gegenüber der entsprechenden Haltemuffe verriegelt werden kann.

9. Weinlesemaschine umfassend wenigstens einen Schüttler gemäß einem der vorangegangenen Ansprüche.
